(19)

Europäisches
Patentamt
European
Patent Office
Office européen
des brevets

(11) **EP 2 154 546 A2**

(12) **EUROPEAN PATENT APPLICATION**

(43) Date of publication:
**17.02.2010 Bulletin 2010/07**

(51) Int Cl.:
***G01S 5/02*** *(2010.01)*

(21) Application number: **09382138.7**

(22) Date of filing: **05.08.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **14.08.2008 ES 200802441**

(71) Applicants:
- **Vodafone Group PLC
  Newbury
  Berkshire RG14 2FN (GB)**
- **Vodafone España, S.A.
  28108 Alcobendas (Madrid) (ES)**

(72) Inventors:
- **Valerdi Rodriguez, David
  28050, MADRID (ES)**

- **Gomez Coloma, Alberto
  28050, MADRID (ES)**
- **Arranz Arauzo, Miguel
  28050, MADRID (ES)**
- **Tenorio Sanz, Santiago
  28050, MADRID (ES)**
- **Alcazar Viguera, Esperanza
  28050, MADRID (ES)**
- **Kelly, Fergal
  28050, MADRID (ES)**
- **Graham, Kenneth
  28050, MADRID (ES)**

(74) Representative: **Carpintero Lopez, Francisco et al
  Herrero & Asociados, S.L.
  Alcalá 35
  28014 Madrid (ES)**

(54) **determining the position of a mobile station**

(57) A method is described for determining the position of a mobile station in a cellular network. It comprises the steps of providing (210) a plurality of radio parameters of the mobile station measured when the mobile station is located at a certain position and estimating (250) the position of the mobile station by comparing the measured radio parameters to a plurality of vectors of radio parameters in a positioning matrix, wherein each of the plurality of vectors is linked to positioning coordinates. The positioning matrix has been previously built based on measurement reports of a plurality of radio parameters of mobile stations, measured when the mobile stations are located at a certain position and positioning coordinates of the mobile stations determined with the aid of an external positioning system, such as GPS. Vectors of the measured radio parameters are created in the positioning matrix and linked to the positioning coordinates.

FIG. 2

EP 2 154 546 A2

**Description**

**BACKGROUND OF THE INVENTION**

**Technical field**

The present invention relates to a method for determining the position of a mobile station in a cellular network and a corresponding system.

**Description of related art**

With the increasing capacity and area coverage of cellular networks around the world, mobile telecommunications users are demanding new and improved services from their mobile telecommunications providers. In particular, of late there has been an increased interest in Location Based Services (LBS) in mobile communications.

LBS provide a mobile station user with location based content delivery, such as local weather forecasts, and can also enable the mobile station user to identify people or outlets near their vicinity. For instance, a mobile phone user can contact a LBS provider to identify their closest petrol station, restaurant, bank or the like, based upon the user's current mobile phone location. Similarly, it can be used to find the location of friends or family, such as for reasons of safety or emergency, or simply meeting up, by requesting the LBS provider for a location update on one or more persons. These services can assist users, by saving them time, rather than travelling around a given geographical area, looking for a particular outlet/person, thus potentially avoiding traffic jams. It can also assist people in emergency situations, such as by helping them to quickly identify their nearest hospital or the location of someone requiring emergency assistance.

A wide variety of mobile station positioning techniques have been proposed to date. One simple method uses the nearest cell area as a means to provide an approximate station position, for instance by assuming the station to be positioned at the centre of a cell area that is a 120 degree sector of a circle (in a tri-sectorial cellular network). This method is currently being used by operators that have already introduced commercial LBS. The accuracy of this approach depends on the size of the cell's coverage area, but will typically provide a mobile station position that has an accuracy of a couple of kilometres. While this approach is adequate for services where low positioning accuracy is necessary, such as local weather forecasting, it is generally considered to be insufficiently accurate for services that require high positioning accuracy, such as in the situation where a person needs to be located due to an emergency situation.

Signal strength based positioning methods are also common. Basically, the distance between mobile stations and base stations can be estimated based on received signal strengths. Considering one common positioning method, if the signal level received at the mobile station of three different base stations is known, the position of the station can be deduced by triangulation. However, the accuracy of this solution is highly dependent on the propagation model used to deduce the distance, since this model is highly dependant on the environment.

There are other positioning methods that use the signal angle of arrival information or signal time of arrival. In the first case the base station needs to be equipped with an array antenna. The main drawback is that line-of-sight is needed for obtaining accurate positions. In the second case full synchronization between the mobile station and base station is required. Furthermore, measurements can be only obtained under dedicated mode, i.e. on a call.

Additionally, according to most known positioning methods, the majority of tasks that are to be performed for determining the position of a mobile station (e.g. data acquisition and uploading) are delegated to the mobile station. This may cause communication performance degradation due to resources that the mobile station has to employ to run such an application.

It is an object of the invention to provide a solution that enables the position of a mobile station to be determined with good accuracy and with a low level of complexity.

**SUMMARY OF THE INVENTION**

Thereto, according to the invention methods according to independent claims 1 and 8 and systems according to independent claims 14 and 15 are provided. Favourable embodiments are defined in dependent claims 2-7 and 9-13.

According to an aspect of the invention, a method is provided for determining the position of a mobile station in a cellular network comprising the steps of providing a plurality of radio parameters of the mobile station measured when the mobile station is located at a certain position and estimating the position of the mobile station by comparing the measured radio parameters to a plurality of vectors of radio parameters in a positioning matrix, wherein each of the plurality of vectors is linked to positioning coordinates. So, according to the invention the measured radio parameters are not directly used to obtain the position but they are compared to vectors of radio parameters previously stored in a positioning matrix.

According to a further aspect of the invention, said positioning matrix is built by providing a measurement report of a plurality of radio parameters of a mobile station, measured when the mobile station is located at a certain position and positioning coordinates of the mobile station determined with the aid of an external positioning system, for example GPS, when the mobile station is located at the certain position. A vector of the measured radio parameters is created and linked to the positioning coordinates determined with the external positioning system. So, the relationship between the vector of the measured radio parameters and the positioning coordinates is created thanks to information provided by mobile stations that are capable of determining their positions by means of an external positioning system, such as GPS.

According to the invention, the position of a mobile station, which is not capable of determining its position by means of an external positioning system, may be determined with an accuracy that is higher than that obtained by most prior art methods for determining the position of a mobile station in a cellular network. Furthermore, it is preferred that the majority of the steps needed for determining the position of the mobile station are performed at the network side, releasing the mobile station from most of the tasks, thereby minimizing the impact on the communication performance.

According to an embodiment, the radio parameters are taken from the group of: serving cell identifier, timing advance, serving cell received signal level and neighbouring cell received signal level.

Preferably, the step of estimating the position of the mobile station comprises: determining the vector of radio parameters that is closest, i.e. having the minimum algebraic distance to the measured radio parameters and estimating the position of the mobile station to be at the positioning coordinates corresponding to the closest vector. However, also other suitable algorithms may be used for estimating the position. For example, a plurality of radio vectors may be determined that are within a certain algebraic distance from the radio parameters measured for the mobile station. The position may then be determined based on the plurality of positioning coordinates linked to the plurality of vectors, possibly applying some weighting factor in order to give more weight to the positioning coordinates corresponding to the closest vector(s).

According to a still further embodiment, the step of estimating the position of the mobile station further comprises performing an initial search of the vectors of radio parameters based on one or more of the radio parameters, wherein out of the vectors of radio parameters found during the initial search, the vector of radio parameters is determined that is closest to the measured radio parameters. For example, a first filter search may be performed by using the cell identifier of the serving cell and a second one, by using the timing advance parameter. In this way a group consisting of a limited number of vectors with the same cell identifier and timing advance is obtained. Out of this group, the vector that is closest to the measured radio parameters of the mobile station is calculated. This calculation may be based on a serving cell received signal level and a neighbouring cell received signal level. In this way, the closest vector is found in less time and with less processing than for the case that the distances between the measured radio parameters and all vectors in the positioning matrix are determined.

According to a still further embodiment a correction factor is applied for determining the vector of radio parameters that is closest to the measured radio parameters for indoor positioning. This enables the position of mobile stations that are located out of doors to be determined as well as that of those indoors.

In a first mode of performance, known as the BSS (Base Station System) transfer mode, the measured radio parameters of the mobile station may be provided to a positioning server, which performs the tasks related to the determination of the position of the mobile terminal, by a controlling node in the cellular network, such as the base station controller (BSC) or radio network controller (RNC). In the alternative MS (Mobile Station) transfer mode, the mobile station is in charge of providing measured radio parameters directly to the positioning server, while, in the BSS transfer mode, the BSC/RNC is responsible for this task. The main advantage of BSS against MS transfer mode is that the mobile station is released from this task which entails among other issues the establishment of a data connection with the positioning server. Besides, as periodic measurements reports are normally sent by the MS to the BSC/RNC, no additional tasks are added for the mobile station. The BSC/RNC provides the measurement data to the positioning server through the core network.

According to an embodiment, if there are multiple measurement reports to be used for building the positioning matrix reported by mobile stations at a coinciding position, the vector of radio parameters corresponding to this coinciding position is created by averaging the plurality of radio parameters of the multiple measurement reports. In this way, the vectors of radio parameters in the positioning matrix become more reliable.

According to a further embodiment, a position density of the positions for which radio vectors are created in the positioning matrix varies over the coverage area of the cellular network. In this way, the accuracy of the matrix may be increased in certain locations that are considered to be of high importance.

According to a still further embodiment, multiple vectors of radio parameters are created in the positioning matrix with different cell identifiers for a position near a cell border. In this way, it is avoided that a vector of radio parameters in the positioning matrix erroneously is excluded from the positioning calculation process, just because its serving cell identifier does not correspond to the serving cell identifier reported by the mobile station.

Preferably, the methods according to the invention are implemented by means of a computer program.

According to a further aspect of the invention a system is provided for determining the position of a mobile station in a cellular network comprising:

- means for providing a plurality of radio parameters of the mobile station measured when the mobile station is located at a certain position; and
- means for estimating the position of the mobile station by comparing the measured radio parameters to a plurality of vectors of radio parameters in a positioning matrix, wherein each of the plurality of vectors is linked to positioning coordinates.

According to a still further aspect of the invention a system is provided for building a positioning matrix to be used for determining the position of a mobile station in a cellular network comprising:

- means for providing a measurement report of a plurality of radio parameters of a mobile station, measured when the mobile station is located at a certain position and positioning coordinates of the mobile station determined with the aid of an external positioning system when the mobile station is located at the certain position and
- means for creating a vector of radio parameters and positioning coordinates linked thereto based on the determined positioning coordinates and measured radio parameters.

These and other aspects of the invention will be apparent from and elucidated with reference to the embodiments described hereinafter.

## BRIEF DESCRIPTION OF THE DRAWINGS

The invention will be better understood and its numerous objects and advantages will become more apparent to those skilled in the art by reference to the following drawings, in conjunction with the accompanying specification, in which:

Figure 1 shows a simplified architecture of a cellular communications system wherein the present invention may be implemented;
Figure 2 shows a flowchart of the positioning method according to an embodiment of the invention;
Figure 3 shows a flowchart illustrating the method for building a positioning matrix to be used for determining the position of a mobile station according to an embodiment of the invention; and
Figure 4 shows a positioning matrix according to an embodiment of the invention.

Throughout the figures like reference numerals refer to like elements.

## DETAILED DESCRIPTION OF THE PRESENT INVENTION

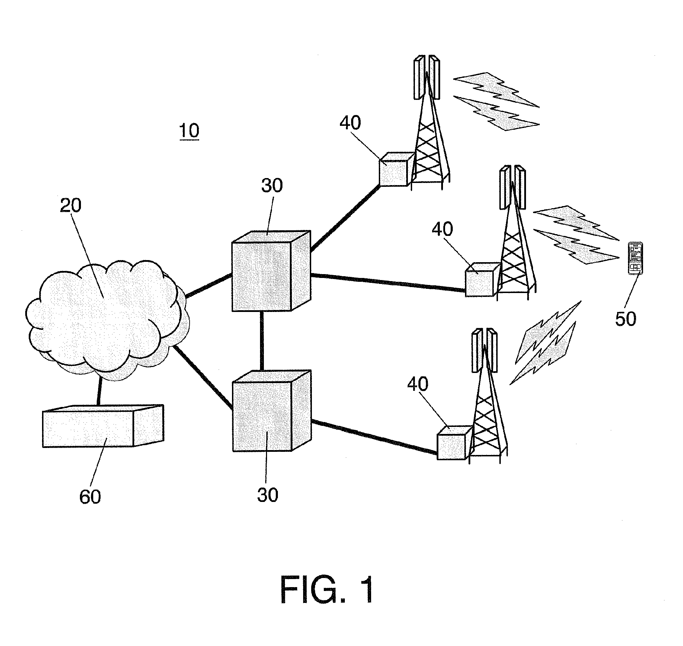

Figure 1 shows a simplified architecture of a cellular network 10 wherein the positioning method according to the invention may be implemented. The figure applies equally to GSM- or UMTS-standard networks. The architecture comprises a core network 20, Base Station Controllers (BSC, in case of GSM)/Radio Network Controllers (RNC, in case of UMTS) 30 and Base Transceiver Stations (BTS, in case of GSM) /Nodes B (in case of UMTS) 40, one of which serves a mobile station (MS) 50. The Cellular network comprises furthermore a server 60 for Location Based Services (LBS).
According to an embodiment of the invention a method is provided for building a positioning matrix that obtains positioning information from GPS capable mobile stations. All mobile stations that are allocated a GSM/UMTS traffic or signalling channel measure periodically, for example every 500 ms, radio link information, both from serving and neighbouring cells. GPS capable mobile stations send this information to the LBS server 60 together with their positioning coordinates measured with the aid of GPS. The LBS server 60 builds a positioning matrix by processing this information and characterising each location using several radio parameters. This positioning matrix is used for estimating the positions of mobile stations, which are either non-GPS capable or for which the GPS capability has not been activated.

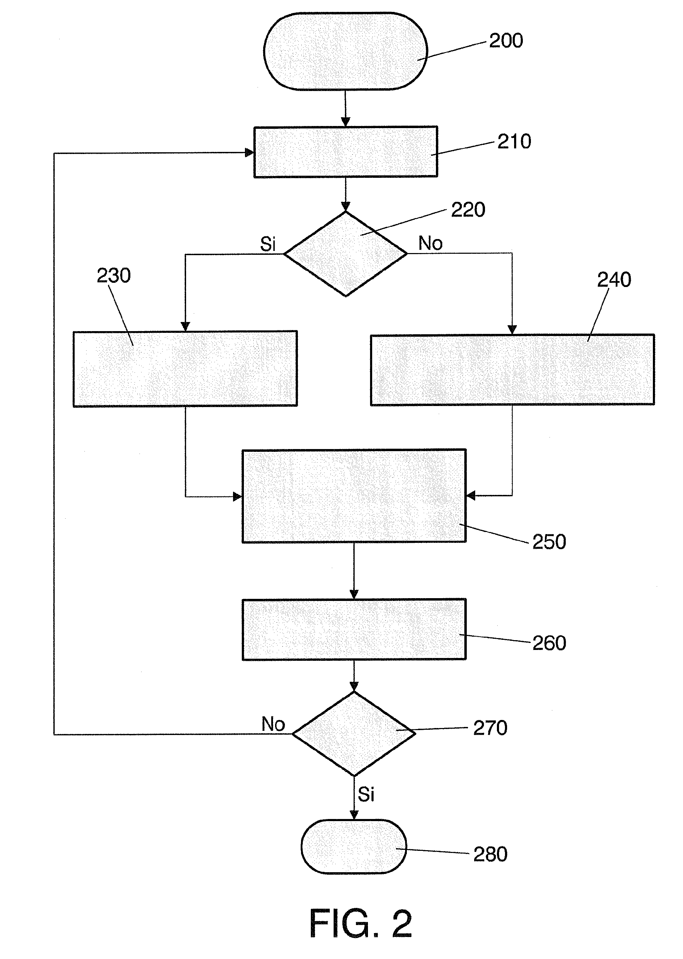

Figure 2 shows a flowchart of a method for estimating the position of a mobile station in a cellular network according to an embodiment of the invention. The steps of the method are the following:

Step 200: LBS Positioning Session Setup & Start.
Step 210: MS sends periodic Measurements
Step 220: BSS Transfer Mode?
Step 230: BSS Transfer Mode: BSC/RNC provides measurement data to LBS server.
Step 240: MS direct Transfer Mode: MS connects and provides measurement data to LBS server.
Step 250: LBS server estimates current MS position by searching the closest vector in the positioning matrix.

Step 260: LBS server provides position to the MS.
Step 270: Stop Session.
Step 280: End.

As shown in the flowchart, the information transfer process between the MS 50 and the LBS server 60 can be implemented in two ways: Base Station System (BSS) transfer mode and Mobile Station (MS) direct transfer mode.

In the MS direct transfer mode, the MS 50 is in charge of providing measurement data directly to the LBS server 60, while, in the BSS transfer mode, the BSC/RNC 30 is responsible for this task. As previously noted, the main advantage of BSS transfer mode against MS direct transfer mode is the fact that the MS is released from the task of providing the measurement data, which entails (among other issues) the establishment of a data session to connect with the LBS server. Besides, as periodic measurements reports are normally sent by MS to the BSC/RNC, if the BSS transfer mode is used the MS does not need to perform any additional tasks. The BSC/RNC provides the measurement data to the LBS server through the core network 20.

The radio parameters considered by the server to characterise a position together define a vector. The radio parameters are for example the following: serving cell identifier, timing advance (TA), serving cell received signal level and received signal from neighbouring cells (normally, MS provides the received signal offset from neighbouring to serving cell, the invention proposes to work with absolute values to simplify the calculus). This last parameter is obtained for a predetermined, configurable number of stronger neighbouring cells.

Before estimating the vector in the positioning matrix with the minimum distance to the measured radio parameters provided by the MS, an initial filter search is carried out in order to make the vector find less time and process consuming. In one implementation, a first filter search is made using the cell identifier (Cell ID) of the serving cell and a second filter search is made using the Timing Advance (TA) parameter.

In this way, a group of vectors with the same Cell ID and TA is obtained. Out of this group, the vector that is closest to the measured radio parameters of the mobile station is calculated by the LBS server. The following calculation may be used to determine the closest vector for outdoor positioning:

$$Dis\tan ce_{outdoor} = \sqrt{\begin{array}{l} k_1\left(Rxlev_{ServingCell}^{matrix} - Rxlev_{ServingCell}^{measurement}\right)^2 + k_2\left(Rxlev_{Neighbour\_1}^{matrix} - Rxlev_{Neighbour\_1}^{measurement}\right)^2 \\ + (...) + k_n\left(Rxlev_{Neighbour\_n-1}^{matrix} - Rxlev_{Neighbour\_n-1}^{measurement}\right)^2 \end{array}}$$

wherein:

- $Rxlev_{ServingCell}$: received signal level of the serving cell measured by the MS.
- $Rxlev_{Neighbour\_i}$: absolute received signal level of the neighbour_i measured by the MS. The number of neighbouring cells depends on the network. The Cell IDs of the matrix and measurement must be coincident, if they are not, the measured received signal level will not be taken into account.
- $K_i$: weights assigned to each involved parameter. Its value depends on network characteristics.

The calculation of the closest vector for indoor positioning may be performed by applying a correction factor in the form of attenuation to the calculation performed for outdoor positioning:

$$Dis\tan ce_{indoor} = \sqrt{\begin{array}{l} k_1\left(\frac{Rxlev_{ServinCell}^{matrix}}{\alpha_{Band}} - Rxlev_{ServinCell}^{measurement}\right)^2 + k_2\left(\frac{Rxlev_{Neighbour\_1}^{matrix}}{\alpha_{Band}} - Rxlev_{Neighbour\_1}^{measurement}\right)^2 \\ + (...) + k_n\left(\frac{Rxlev_{Neighbour\_n-2}^{matrix}}{\alpha_{Band}} - Rxlev_{Neighbour\_n-2}^{measurement}\right)^2 \end{array}}$$

wherein:

- $\alpha_{band}$: is an attenuation factor. It depends on the frequency band used by the cellular network.

Among the group of vectors filtered by the Cell ID and the TA, the LBS server calculates both the outdoor and the indoor distance to the measured radio parameters of the mobile station. The vector with the smallest distance, either "outdoor" or "indoor", is selected. This vector is related to a location (positioning coordinates) in the positioning matrix. The location of the MS is considered to be at these positioning coordinates. The positioning coordinates are provided to the MS.

In this way, the location of both mobile stations that are located outdoor and mobile stations that are located indoor may be determined, accurately. If the mobile station is located outdoor the smallest distance will be without any doubt a distance determined according to the formula for outdoor positioning. Similarly, if the mobile station is located indoor the smallest distance will be without any doubt a distance determined according to the formula for indoor positioning.

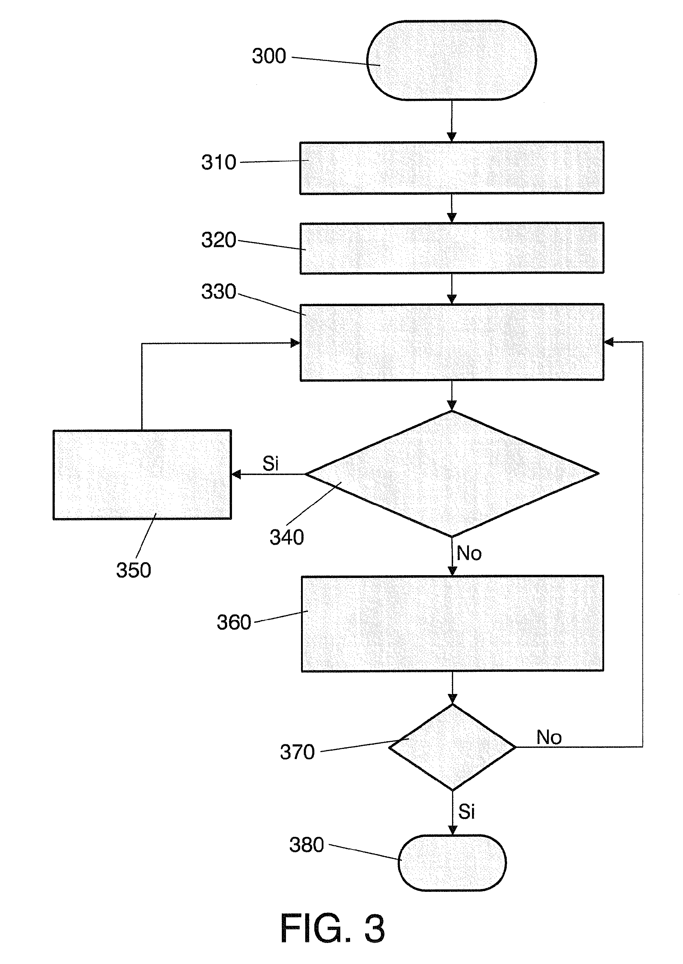

It is of vital importance for the functioning of the mobile station positioning method that the positioning matrix is built in a reliable way. Figure 3 shows a flowchart of a method for building a positioning matrix according to an embodiment of the invention. The steps of the method are the following:

Step 300: LBS Positioning Matrix Building Process.
Step 310: Network detects GPS capable MS and provides this Information to LBS Server. There are several ways to detect a GPS capable MS. The simplest one is to use the IMEI, which is sent to the base station system, to determine the device model and check if this model is GPS capable. Other new device management techniques allow to retrieve more details about the device.
Step 320: LBS Server starts session with GPS capable MS.
Step 330: MS provides GPS Positioning Coordinates jointly with corresponding Measurement Report of Measured Radio Parameters to LBS server.
Step 340: Is the MS in a GPS Position $\pm$ Grid Accuracy for which there is already Data available in Positioning Matrix?
Step 350: LBS Server performs Averaging on the Measurement Reports.
Step 360: LBS Server writes to Matrix the Average Measurement Report with the Corresponding Grid Position.
Step 370: Stop Session.
Step 380: End.

The implementation of the positioning matrix is conditional on several design premises, such as the expected position accuracy, the variance of averaged measurement vectors, the number of averaged vectors, etc. Basically, a trade-off solution has to be reached between the positioning matrix size, access time and the real time requirements for providing the MS with its estimated position by the LBS server.

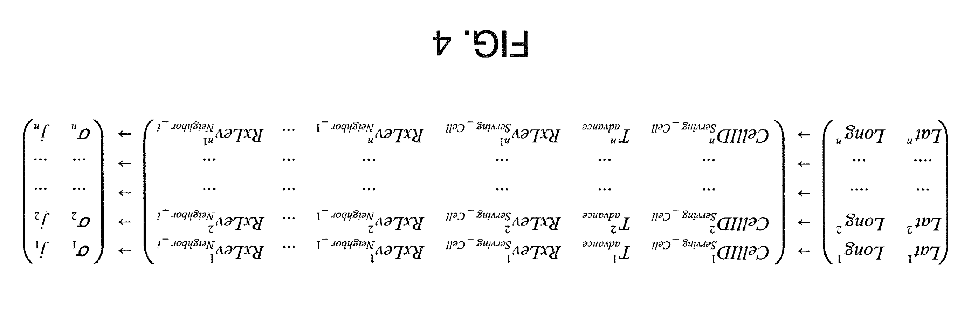

Figure 4 shows a positioning matrix according to an exemplary embodiment of the invention, wherein:

$Lat^i$, $Long^i$: coordinates of the grid selected according to positioning accuracy objectives.
$\sigma_i$: typical deviation obtained from vector averaging. This data can be used as a design parameter as will be explained herein after.
$j_i$: number of averaged vectors per row.

The positioning matrix shown in figure 4 may be considered the "standard" positioning matrix. However, there may be some variants depending on the radio conditions. For instance, when a grid position is located in a cell border and there is no clear predominant serving cell, this grid position may have more than one related Cell ID with their respective measurement vectors.

The positioning matrix is continuously being improved by adding measurement data provided by GPS enabled mobile stations. The accuracy of the grid may be variable in terms of the typical deviation related to a particular vector position, the type of the scenario (urban, sub-urban, rural), etc. In this sense, the granularity of the grid may be increased in certain locations to improve the accuracy of positioning there. If the typical deviation of the averaged vectors for a certain position is too high, probably because of the radio environment, then the granularity of the grid on these areas should be increased to make the this deviation decrease and, eventually, obtain a more accurate position. Urban scenarios may require more granularity due to a bigger number of obstacles (e.g buildings). These obstacles may increase the deviation among vectors measured in very near positions. On the other hand, rural scenarios are more homogeneous, so less deviation is expected and less granularity is needed to get the same accuracy as in urban scenarios.

While the invention has been illustrated and described in detail in the drawings and foregoing description, such illustration and description are to be considered illustrative or exemplary and not restrictive; the invention is not limited to the disclosed embodiments.

Furthermore, other external positioning systems than GPS may be used to determine the position of the mobile stations, such as the positioning system "Galileo" currently under development.

Of course, other radio parameters may be used than the ones described earlier in order to estimate the position of the mobile stations an d in order to build the positioning matrix.

Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1.  Method for determining the position of a mobile station (50) in a cellular network (10) comprising the steps of:

    - providing (210) a plurality of radio parameters of the mobile station measured when the mobile station is located at a certain position; and
    - estimating (250) the position of the mobile station by comparing the measured radio parameters to a plurality of vectors of radio parameters in a positioning matrix, wherein each of the plurality of vectors is linked to positioning coordinates.

2.  Method according to claim 1 wherein the radio parameters are taken from the group of: serving cell identifier, timing advance, serving cell received signal level and neighbouring cell received signal level.

3.  Method according to claim 1 or 2, wherein the step of estimating the position of the mobile station comprises:

    - determining the vector of radio parameters that is closest to the measured radio parameters and
    - estimating the position of the mobile station to be at the positioning coordinates corresponding to the closest vector.

4.  Method according to claim 3 wherein the step of estimating the position of the mobile station further comprises performing an initial search of the vectors of radio parameters based on one or more of the radio parameters, wherein out of the vectors of radio parameters found during the initial search, the vector of radio parameters is determined that is closest to the measured radio parameters.

5.  Method according to claim 3 or 4 wherein the step of determining the vector of radio parameters that is closest to the measured radio parameters is performed based on a serving cell received signal level and a neighbouring cell received signal level.

6.  Method according to claim 5 wherein a correction factor is applied for determining the vector of radio parameters that is closest to the measured radio parameters for indoor positioning.

7.  Method according to any one of claims 1-6 wherein the measured radio parameters are provided to a positioning server (60) by a controlling node (30) in the cellular network (10).

8.  Method for building a positioning matrix to be used for determining the position of a mobile station (50) in a cellular network (10) comprising the steps of:

    - providing (330) a measurement report of a plurality of radio parameters of a mobile station, measured when the mobile station is located at a certain position and positioning coordinates of the mobile station determined with the aid of an external positioning system when the mobile station is located at the certain position and
    - creating (350,360) a vector of radio parameters and positioning coordinates liked thereto based on the determined positioning coordinates and measured radio parameters.

9.  Method according to claim 8 wherein the radio parameters are taken from the group of: serving cell identifier, timing advance, serving cell received signal level neighbouring cell received signal level.

10. Method according to claim 8 or 9 wherein if there are multiple measurement reports at a coinciding position, the vector of radio parameters is created by averaging (350) the plurality of radio parameters of the multiple measurement reports.

11. Method according to any one of the claims 8-10 wherein a position density of the positions for which radio vectors are created varies over the coverage area of the cellular network.

12. Method according to any one of the claims 8-11 wherein multiple vectors of radio parameters are created with different cell identifiers for a position near a cell border.

13. A computer program comprising computer program code means adapted to perform the steps of any one of claims 1 to 12, when said program is run on a computer.

14. System for determining the position of a mobile station (50) in a cellular network (10) comprising:

- means for providing a plurality of radio parameters of the mobile station measured when the mobile station is located at a certain position; and
- means for estimating the position of the mobile station by comparing the measured radio parameters to a plurality of vectors of radio parameters in a positioning matrix, wherein each of the plurality of vectors is linked to positioning coordinates.

15. System for building a positioning matrix to be used for determining the position of a mobile station (50) in a cellular network (10) comprising:

- means for providing a measurement report of a plurality of radio parameters of a mobile station, measured when the mobile station is located at a certain position and positioning coordinates of the mobile station determined with the aid of an external positioning system when the mobile station is located at the certain position and
- means for creating a vector of radio parameters and positioning coordinates linked thereto based on the determined positioning coordinates and measured radio parameters.

10

20

30

40

40

40

50

60

30

30

FIG. 1

FIG. 2

300 —

310 —

320 —

330 —

340

350

Si

No

360 —

370 —

No

Si

380 —

# FIG. 3

$$\begin{pmatrix} Lat^1 & Long^1 \\ Lat^2 & Long^2 \\ ... & .... \\ .... & ... \\ Lat^n & Long^n \end{pmatrix} \rightarrow \begin{pmatrix} CellID^1_{Serving\_Cell} & T^1_{advance} & RxLev^1_{Serving\_Cell} & RxLev^1_{Neighbor\_1} & ... & RxLev^1_{Neighbor\_i} \\ CellID^2_{Serving\_Cell} & T^2_{advance} & RxLev^2_{Serving\_Cell} & RxLev^2_{Neighbor\_1} & ... & RxLev^2_{Neighbor\_i} \\ ... & ... & ... & ... & ... & ... \\ ... & ... & ... & ... & ... & ... \\ CellID^n_{Serving\_Cell} & T^n_{advance} & RxLev^{n1}_{Serving\_Cell} & RxLev^n_{Neighbor\_1} & ... & RxLev^{n1}_{Neighbor\_i} \end{pmatrix} \rightarrow \begin{pmatrix} \sigma_1 & j_1 \\ \sigma_2 & j_2 \\ ... & ... \\ ... & ... \\ \sigma_n & j_n \end{pmatrix}$$

# FIG. 4